# FASCICULE DE BREVET EUROPEEN

(11) **EP 1 472 780 B1**
(45) Date de publication et mention de la délivrance du brevet: **10.08.2016**
(21) Numéro de dépôt: 03718840.6
(22) Date de dépôt: 05.02.2003
(51) Int. Cl.: H02M 1/00, H02M 5/293, H02M 3/335, H02M 3/158

(54) **CONVERTISSEUR STATIQUE D'ENERGIE ELECTRIQUE DESTINE A MODULER L'ENERGIE ELECTRIQUE ECHANGEE ENTRE AU MOINS UNE SOURCE DE TENSION ET UNE SOURCE DE COURANT**
STATISCHER WANDLER ELEKTRISCHER ENERGIE ZUR MODULIERUNG DER ELEKTRISCHEN ENERGIE ZWISCHEN MINDESTENS EINER SPANNUNGSQUELLE UND EINER STROMQUELLE
STATIC ELECTRIC POWER CONVERTER FOR MODULATING ELECTRIC POWER EXCHANGED BETWEEN AT LEAST A VOLTAGE SOURCE AND A CURRENT SOURCE

(30) Priorité: 08.02.2002 FR 0201580
(43) Date de publication de la demande: 03.11.2004
(73) Titulaire: CENTRE NATIONAL DE LA RECHERCHE SCIENTIFIQUE -CNRS-, 75016 Paris (FR)
(72) Inventeur: RICHARDEAU, Frédéric, F-31130 Flourens (FR); FOCH, Henri, F-31200 Toulouse (FR)
(74) Mandataire: Novagraaf Technologies
(86) Numéro de dépôt international: PCT/FR2003/000357
(87) Numéro de publication internationale: WO 2003/067745

(56) Documents cités:
- US-A- 4 617 508
- US-A- 5 629 607
- US-A- 5 635 826
- US-A- 5 680 034

## Description

L'invention concerne un convertisseur statique d'énergie électrique destiné à moduler l'énergie électrique échangée entre au moins deux sources électriques, comprenant au moins une source électrique de tension, une source de courant, et au moins une cellule de commutation électrique, chaque cellule de commutation comportant au moins deux interrupteurs statiques de commutation connectés en étoile sur la (ou les) source(s) de tension, avec le point commun de l'étoile connecté à la source de courant, et ladite source de courant étant refermée sur la (ou les) source(s) de tension.

Les cellules de commutation électrique reposent sur la présence d'au moins deux interrupteurs destinés à moduler l'énergie électrique échangée entre au moins deux sources électriques. Ces interrupteurs sont dans un état électrique "ouvert" ou "fermé", et la modulation consiste à ouvrir et à fermer alternativement ces interrupteurs pendant des durées variables.

A l'heure actuelle, les changements d'état, ou commutations, d'un interrupteur sont provoqués :
- soit par l'environnement de l'interrupteur (au moyen des sources électriques environnantes). On parle alors de commutation spontanée de l'interrupteur et ce dernier ne possède pas d'électrode de commande susceptible de provoquer la commutation. Exemple : la diode,
- soit par l'action d'une électrode du composant prévue à cet effet. Exemple : amorçage d'un thyristor par sa gâchette. On parle alors de commutation commandée de l'interrupteur.

En outre, les relations entre les mécanismes de commutation des interrupteurs dans une cellule résultent des lois des noeuds et des mailles relatives à cette même cellule, et du caractère dissipatif des interrupteurs. Ainsi :
- une commutation commandée d'un interrupteur implique une commutation spontanée de l'autre interrupteur,
- une commutation spontanée d'un interrupteur implique une commutation spontanée de l'autre interrupteur.

Par conséquent, les interrupteurs des convertisseurs statiques actuels offrent un nombre restreint de mécanismes possibles de commutation, et les concepteurs sont ainsi contraints de faire appel à des associations multiples de cellules de commutation électrique et à une gestion des commutations commandées plus ou moins complexes utilisant des capteurs.

Par ailleurs, les cellules de commutation électrique nécessitent également des protections qui consistent, à l'heure actuelle, en des fonctions spécifiques en état de "veille", qui peuvent être constituées soit de composants additionnels, soit de composants intégrés au sein même d'interrupteurs conventionnels dédiés à la commutation. A titre d'exemple, le brevet US-4 617 508 décrit un tel type de cellules qui permet de commander un interrupteur et intègre une protection.

US5635826 décrit un convertisseur avec un module de détection de la tension de sortie du convertisseur pour réguler cette tension.

Par conséquent, tant que le point de fonctionnement de la cellule est à l'intérieur de l'aire de sécurité, ces protections ne participent pas au mécanisme de commutation et sont réellement "transparentes". Elles constituent donc des éléments spécifiques surajoutés aux interrupteurs dédiés à la commutation, et qui conduisent à augmenter la complexité et le coût des circuits de conversion de puissance électrique.

Un autre inconvénient réside dans le fait que les convertisseurs statiques actuels ne peuvent pas exploiter les matériaux supraconducteurs, photoconducteurs, du fait que ces matériaux ne peuvent pas avoir de transitions spontanées. Ainsi seuls, actuellement, les matériaux semiconducteurs sont utilisables pour la réalisation de convertisseurs statiques.

La présente invention vise à pallier ces inconvénients et a pour principal objectif de fournir un troisième type de commutation dans les cellules de commutation électrique, qui entraîne l'apparition de mécanismes de commutation supplémentaires par rapport à ceux des cellules actuelles.

Un autre objectif de l'invention est de fournir des convertisseurs statiques d'énergie électrique auto-protégés sans l'apport de capteur ou de commande externe et spécifique.

Un autre objectif de l'invention est de permettre de réaliser en toute sécurité des interrupteurs qui n'exploitent pas les propriétés des semiconducteurs, tels que par exemple les supraconducteurs, les photoconducteurs (diamant...).

A cet effet, l'invention vise un convertisseur statique d'énergie électrique tel que décrit dans le préambule ci-dessus, se caractérisant en ce qu'au moins un des interrupteurs statiques d'au moins une cellule de commutation, dit interrupteur à commutation automatique, est un interrupteur pourvu de deux électrodes de sortie dont au moins un des changements d'état (assurant une commutation à l'ouverture ou à la fermeture) est automatique et s'opère exclusivement à un seuil de tension prédéfini différent de zéro lors de la croissance de la valeur absolue de ladite tension.

Il convient de souligner que l'exclusivité, selon l'invention, est à opposer aux systèmes traditionnels de protection dans lesquels un ordre de commutation de blocage (respectivement d'amorçage) est mis en redondance avec une commutation de blocage (respectivement d'amorçage) automatique. Dans ce cas traditionnel, en effet, la première cause de commutation de blocage (respectivement d'amorçage) qui apparaît provoque effectivement ladite commutation et rend la seconde inopérante : ceci correspond au mécanisme traditionnel de protection intégrée.

Un changement d'état résultant du troisième type de commutation selon l'invention, dite commutation automatique, consiste donc en :
- un blocage automatique par chute de tension excessive aux bornes d'un interrupteur à l'état passant,
- un amorçage automatique par excès de tension aux bornes d'un interrupteur à l'état bloqué.

L'invention a donc consisté à créer un troisième type de commutation, autre que les commutations commandées et spontanées, qui consiste en une commutation auto-commandée qui s'opère à un seuil de tension prédéfini, différent de zéro, positif ou négatif, en s'éloignant du seuil zéro, et situé à l'intérieur de l'aire de sécurité électrothermique de l'interrupteur.

Cette commutation, dite commutation automatique, s'applique, en outre, sur au moins un interrupteur, à la fermeture et/ou à l'ouverture et de façon exclusive vis-à-vis de cette commutation.

Grâce à l'introduction de cette commutation automatique dans une cellule de commutation électrique, l'invention entraîne l'apparition de nouveaux couples de commutation supplémentaires de ceux afférant aux commandes spontanées et commandées :
- une commutation commandée associée à une commutation automatique : amorçage automatique et blocage commandé ou amorçage commandé et blocage automatique,
- ou une commutation spontanée associée à une commutation automatique : amorçage automatique et blocage spontané ou amorçage spontané et blocage automatique,
- ou une commutation automatique associée à une commutation automatique.

L'originalité de l'invention a donc consisté en la mise à jour de nouveaux mécanismes de commutation pour des interrupteurs, dits à commutation automatique, qui peuvent être associés entre eux ou à des interrupteurs conventionnels à commutation spontanée ou commandée pour former de nouvelles cellules élémentaires de commutation. De telles cellules utilisées seules ou par association peuvent ainsi constituer le coeur de nouveaux convertisseurs statiques d'énergie électrique caractérisés par des fonctionnalités nouvelles et par un haut niveau de fiabilité.

Ainsi, par exemple, de telles cellules font apparaître au niveau de la cellule elle-même ou bien au niveau d'associations particulières mais néanmoins élémentaires de cellules, de nouvelles fonctions de conversion telles que redresseur non contrôlé réversible en courant, redresseur contrôlé réversible en courant et en tension, liaison à courant continu ou à tension continue non contrôlée et réversible, munie d'un isolement galvanique HF, gradateur MLI. A noter qu'à l'heure actuelle, de telles fonctions n'existent pas naturellement sous forme de cellule élémentaire, et que les concepteurs sont ainsi contraints de faire appel à des associations multiples de cellules et à des commandes utilisant des capteurs.

Par ailleurs, toute cellule de commutation électrique sujette à au moins une commutation automatique est caractérisée par une tension et un courant situés à l'intérieur de l'aire de sécurité des interrupteurs composant cette cellule. Tout convertisseur statique exploitant de telles cellules est ainsi intrinsèquement auto-protégé sans l'apport de capteur ou de commande externe spécifique.

Toutes ces données font que les retombées techniques de l'invention s'expriment en termes de sécurité de fonctionnement et de simplification des convertisseurs statiques d'énergie électrique. Les retombées économiques se situent quant à elles au niveau d'une meilleure disponibilité des équipements et par des convertisseurs statiques eux-mêmes peu coûteux.

Par ailleurs, l'introduction du changement automatique permet d'associer des interrupteurs à commutation automatique avec des interrupteurs à commutation commandée de mêmes types de matériaux tels que supraconducteurs, photoconducteurs, en vue de la réalisation de circuits de conversion statique.

Selon un mode de réalisation avantageux, le convertisseur statique selon l'invention, comporte, pour chaque interrupteur à commutation automatique, en vue d'assurer chacun des changements d'état automatiques dudit interrupteur :
- un détecteur différentiel de tension connecté en parallèle sur les électrodes de sortie dudit interrupteur et adapté pour délivrer un signal représentatif de la valeur absolue de la tension aux bornes desdites électrodes,
- un comparateur de tension, associé au détecteur de tension et adapté pour délivrer un signal de changement d'état, à l'ouverture ou à la fermeture, lorsque le seuil de tension prédéfini est atteint,
- et des moyens de commutation connectés au comparateur de tension et adaptés pour provoquer un changement d'état de l'interrupteur, assurant une commutation à l'ouverture ou la fermeture, lors de la réception du signal de changement d'état.

Ainsi, la commutation automatique ne fait appel qu'à un détecteur de tension placé aux bornes de l'interrupteur à commutation automatique. Cet interrupteur ne comporte donc pas d'électrode de mesure de courant ou de capteur placé en série susceptible d'être exploité pour la commutation automatique.

De plus, de façon avantageuse, les moyens de commutation comprennent une bascule électronique comportant, pour chaque changement d'état automatique d'un interrupteur à commutation automatique, une entrée connectée au comparateur de tension de façon à être activée lors de la réception d'un signal de changement d'état délivré par ce dernier, et à engendrer l'émission d'un signal de commutation vers l'interrupteur à commutation automatique.

Par ailleurs, chaque interrupteur à commutation automatique comporte avantageusement au moins un transistor doté d'une électrode de commande actionnée par les moyens de commutation.

Sur cette base, et selon les fonctions de conversion recherchées, chaque interrupteur à commande automatique peut ainsi comporter de façon avantageuse uniquement un seul transistor, une jonction connectée en parallèle avec chaque transistor, ladite jonction pouvant présenter une fonction de diode ou de thyristor, ou deux transistors associés chacun à une jonction et montés tête-bêche en série.

Selon une première application avantageuse, le convertisseur statique selon l'invention comprend au moins un interrupteur à commutation automatique dont un changement d'état, assurant la fermeture ou l'ouverture, est automatique, et dont l'autre changement d'état, assurant l'ouverture ou la fermeture, est commandé.

En outre, selon cette application, et de façon avantageuse, ce convertisseur statique comprend, en vue du changement d'état commandé de chaque interrupteur à commutation automatique :
- une ligne de commande sur laquelle est délivré un signal constitué d'impulsions périodiques de commande du changement d'état commandé de l'interrupteur,
- une ligne de dérivation comportant un inverseur et connectée à la ligne de commande et à une des entrées d'une porte logique "ET" dont l'autre entrée reçoit le signal issu du comparateur de tension, et dont la sortie est reliée aux moyens de commutation.

A titre d'exemples de réalisation avantageux selon cette application peuvent être cités par exemple :
- un convertisseur statique du type hacheur comprenant une cellule de commutation électrique comportant un interrupteur à commande automatique composé d'un transistor et dont le changement d'état automatique assure l'ouverture, et dont le changement d'état commandé assure la fermeture, et un second interrupteur présentant une fonction de diode,
- un convertisseur statique du type hacheur comprenant une cellule de commutation électrique comportant un interrupteur à commande automatique composé d'un transistor et dont le changement d'état automatique assure la fermeture, et dont le changement d'état commandé assure l'ouverture, et un second interrupteur présentant une fonction de diode,
- un convertisseur statique du type gradateur MLI comprenant une cellule de commutation électrique comportant deux interrupteurs à commutation automatique dotés chacun de deux transistors en parallèle chacun avec une jonction, assurant respectivement les changements d'état à l'ouverture et à la fermeture,
- un convertisseur statique du type pont redresseur comprenant deux cellules de commutation électrique disposées de part et d'autre d'une source de tension alternative et comportant chacune deux interrupteurs à commande automatique assurant, pour chacune desdites cellules, respectivement les changements d'état à l'ouverture et à la fermeture, chacun desdits interrupteurs étant composé d'un transistor et d'un ensemble de jonctions en parallèle présentant la fonction de thyristor.

Selon une deuxième application avantageuse, le convertisseur statique selon l'invention comprend au moins un interrupteur à commande automatique dont les deux changements d'état assurant la fermeture et l'ouverture sont automatiques.

A titre d'exemples avantageux selon cette deuxième application peuvent être cités des convertisseurs statiques consistant en des hacheurs associés à leur filtre ou à des éléments de stockage inductif ou capacitif, soit sans stockage (ou survolteur), soit avec stockage inductif ou capacitif, ou encore consistant en des gradateurs.

Selon une troisième application avantageuse, le convertisseur statique selon l'invention comprend au moins un interrupteur à commutation automatique dont un changement d'état, assurant la fermeture ou l'ouverture, est automatique, et dont l'autre changement d'état, assurant l'ouverture ou la fermeture est spontané.

En outre, selon cette application, et de façon avantageuse, ce convertisseur statique comprend, en vue du changement d'état spontané assurant une commutation à la fermeture, une ligne de changement d'état comportant un inverseur et reliant le comparateur de tension et les moyens de commutation.

A titre d'exemples avantageux selon cette troisième application, peuvent être cités des convertisseurs statiques du type onduleur ou redresseur.

D'autres caractéristiques, buts et avantages de l'invention ressortiront de la description détaillée qui suit en référence aux dessins annexés qui en représentent à titre d'exemples non limitatifs six modes de réalisation de mécanisme de commutation d'un interrupteur à commutation automatique conforme à l'invention, ainsi que pour chacun desdits modes de réalisation, des exemples de convertisseurs statiques utilisant le mécanisme de commutation considéré. Sur ces dessins :
- la figure 1 est un schéma de principe d'une cellule élémentaire de commutation conforme à l'invention,
- la figure 2 est un schéma d'un circuit électronique apte à assurer les différents mécanismes de commutation d'un interrupteur générique à commande automatique selon l'invention,
- la figure 3a est un schéma électronique d'un mécanisme de commande d'un interrupteur à fermeture commandée et à ouverture automatique,
- la figure 3b est un schéma électronique d'une variante de mécanisme de commande d'un interrupteur à fermeture commandée et à ouverture automatique.
- les figures 4 à 9 représentent six exemples de convertisseurs statiques comportant au moins un interrupteur à commande automatique fonctionnant selon le mode de commutation représenté à la figure 3,
- la figure 10 est un schéma électronique d'un mécanisme de commande d'un interrupteur à fermeture spontanée et à ouverture automatique,
- les figures 11 à 14 représentent quatre exemples de convertisseurs statiques comportant au moins un interrupteur à commande automatique fonctionnant selon le mode de commutation représenté à la figure 10,
- la figure 15 est un schéma électronique d'un mécanisme de commande d'un interrupteur à fermeture automatique et à ouverture commandée,
- les figures 16 à 19 représentent quatre exemples de convertisseurs statiques comportant au moins un interrupteur à commande automatique fonctionnant selon le mode de commutation représenté à la figure 15,
- la figure 20 est un schéma électronique d'un mécanisme de commande d'un interrupteur à fermeture automatique et ouverture spontanée,
- la figure 21 représente un exemple de convertisseur statique comportant au moins un interrupteur à commande automatique fonctionnant selon le mode de commutation représenté à la figure 20,
- la figure 22 est un schéma électronique d'un mécanisme de commande d'un interrupteur à fermeture automatique et à ouverture automatique,
- et les figures 23 à 26 représentent quatre exemples de convertisseurs statiques comportant au moins un interrupteur à commande automatique fonctionnant selon le mode de commutation représenté à la figure 22.

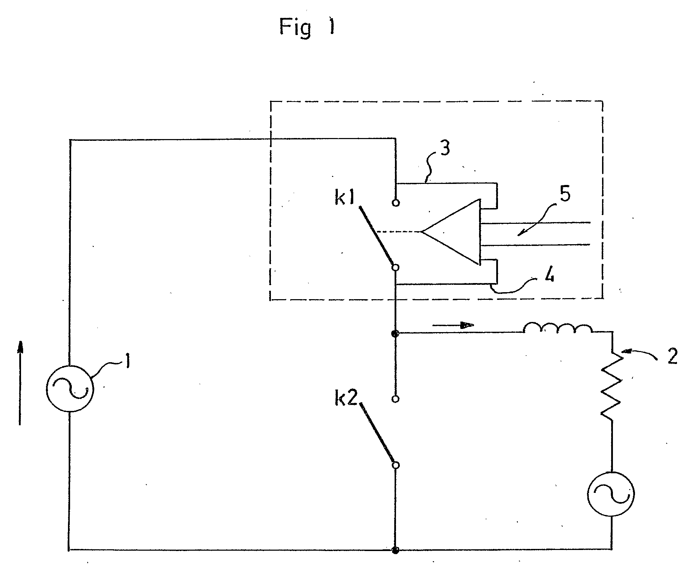

La cellule élémentaire de conversion représentée à la figure 1 comprend, de façon classique, une source électrique de tension 1, une source de courant 2, et deux interrupteurs statiques de commutation K1, K2 connectés en étoile sur la source de tension 1, avec le point commun de l'étoile connecté à la source de courant 2.

Selon l'invention, au moins un des interrupteurs statiques en l'exemple K1, est un interrupteur doté de deux électrodes de sortie 3, 4, dont au moins un des changements d'état est automatique et s'opère exclusivement à un seuil prédéfini différent de zéro lors de la croissance de la valeur absolue de ladite tension.

Cet interrupteur K1 est, en outre, associé à un mécanisme de commutation 5 apte à permettre de commander cinq modes de commutation différents dudit interrupteur, à savoir :
- fermeture commandée - ouverture automatique,
- fermeture spontanée - ouverture automatique,
- fermeture automatique - ouverture commandée,
- fermeture automatique - ouverture spontanée,
- fermeture automatique - ouverture automatique.

L'autre interrupteur K2 peut quant à lui, tel que décrit ci-après, consister en un interrupteur à commutation commandée, spontanée, ou automatique.

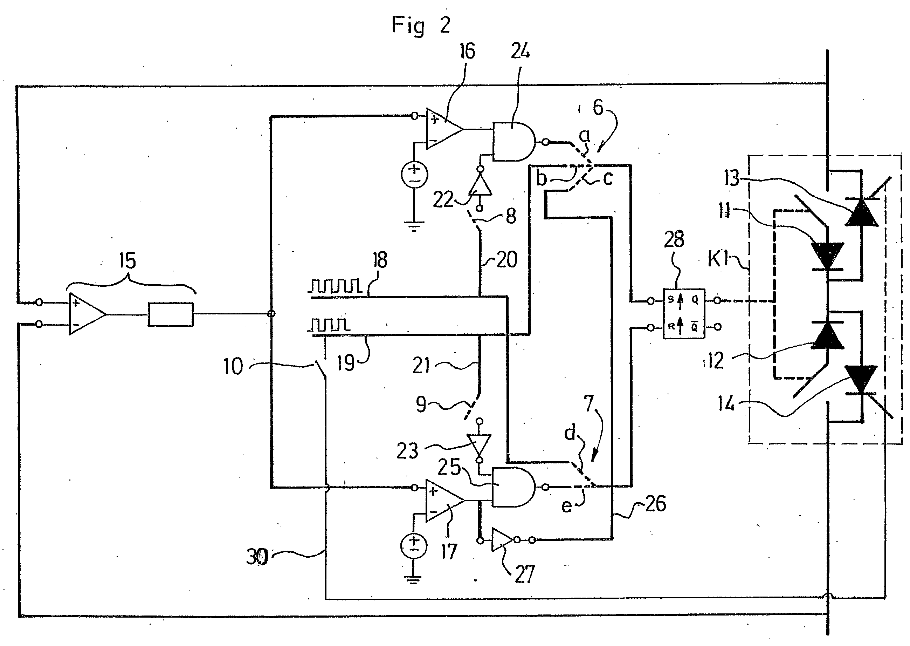

La figure 2 représente un schéma électronique global d'un mécanisme de commutation permettant de sélectionner au choix, au moyen de sélecteurs 6 à 10, un des modes de commutation précités de l'interrupteur K1, lui-même constitué d'un interrupteur générique apte à accepter chacun de ces modes de configuration.

A cet effet, et en premier lieu, l'interrupteur K1 se compose de deux transistors 11 et 12 montés tête-bêche en série, et en parallèle avec chacun de ces transistors 11, 12, une jonction 13, 14 pouvant présenter soit une fonction de diode, soit une fonction de thyristor.

Ainsi constitué, cet interrupteur K1 se présente sous la forme d'un interrupteur subdivisé en deux interrupteurs secondaires 11-13 et 12-14 qui permettent, d'une part, chacun une réversibilité de la tension, et d'autre part, pour le premier 11-13, le passage d'un courant positif ou négatif, et pour le second 12-14 le passage d'un courant négatif ou positif.

Le mécanisme de commutation comporte quant à lui, en premier lieu, des moyens de mesure de la tension aux bornes de l'interrupteur K1, constitués d'un capteur 15 de mesure différentiel de tension apte à délivrer un signal dont la grandeur est une image de la valeur absolue de la tension aux bornes de K1.

Ce capteur de mesure 15 est relié à une des entrées de deux comparateurs de tension 16, 17 adaptés pour délivrer un signal de changement d'état respectivement à l'ouverture et à la fermeture, pour deux seuils de tension prédéfinis respectivement d'ouverture et de fermeture.

Ainsi, le seuil de fermeture automatique engendrant l'émission d'un signal de changement d'état par le comparateur 16 est un seuil haut, par exemple 1000 V (en valeur absolue).

Le seuil d'ouverture automatique engendrant l'émission d'un signal de changement d'état par le comparateur 17 est quant à lui un seuil bas, par exemple de 8 V (en valeur absolue), qui constitue également un seuil de fermeture spontanée.

En vue d'entraîner un changement d'état commandé, à la fermeture ou à l'ouverture, de l'interrupteur K1, ce mécanisme de commutation comprend, en outre, deux lignes de commande 18, 19 sur lesquelles sont délivrés des signaux constitués d'impulsions périodiques de commande respective de l'ouverture commandée et de la fermeture commandée de l'interrupteur K1.

De plus, en vue de ces changements d'état commandés, deux lignes de dérivation 20, 21 comportant chacune un inverseur 22, 23 sont connectées chacune à une des lignes de commande 18, 19 et à une entrée d'une porte logique "ET" 24, 25 dont l'autre entrée reçoit le signal issu d'un des comparateurs 16, 17. Ces lignes de dérivation 20, 21 suppriment ainsi tout antagonisme entre la commutation commandée par l'électrode externe et la commutation automatique.

Chacune des lignes de commande 18, 19 est quant à elle connectée en sortie d'une des portes logiques 24, 25.

En supplément, ce mécanisme de commutation permet également d'obtenir une fermeture commandée de l'interrupteur K1. A cet effet, ce mécanisme de commutation comprend une ligne de commande auxiliaire 30 sur laquelle est interposé un sélecteur 10, et reliant la ligne de commande 19 aux gâchettes des thyristors 13, 14 de l'interrupteur K1.

Par ailleurs, en vue d'entraîner une fermeture spontanée de l'interrupteur K1, une ligne de fermeture spontanée 26 comportant un inverseur 27 est connectée en sortie du comparateur 17 associé au seuil d'ouverture automatique et en sortie de la porte logique 24 associée à l'autre comparateur 16.

Tel que précité, le choix du mode de commutation est déterminé par la sélection de la position de sélecteurs :
- un sélecteur 6 à trois positions (a), (b), (c) pour le choix du mode de commutation à la fermeture dont, tel que représenté à la figure 2 :
   - la position (a) détermine le choix d'une fermeture automatique,
   - la position (b) détermine le choix d'une fermeture commandée et entraîne la fermeture d'un sélecteur asservi 9, situé sur la ligne de dérivation 21 associée à la ligne de commande à la fermeture 19,
   - la position (c) détermine le choix d'une fermeture spontanée,
- un sélecteur 7 à deux positions (d), (e) pour le choix du mode de commutation à l'ouverture dont, tel que représenté à la figure 2 :
   - la position (d) détermine le choix d'une ouverture commandée et entraîne la fermeture d'un sélecteur asservi 8 situé sur la ligne de dérivation 20 associée à la ligne de commande à l'ouverture 18,
   - la position (e) détermine le choix d'une ouverture automatique.
- un sélecteur 10 ouvert ou fermé dont la position fermée détermine le choix d'une fermeture commandée.

En dernier lieu, le signal de commande à la fermeture, de nature fonction de la position du sélecteur 6, est délivré vers l'entrée "set" d'une bascule électronique 28 dont la sortie Q est reliée aux électrodes de commande des transistors 11, 12 de l'interrupteur K1.

Le signal de commande à l'ouverture, de nature fonction de la position du sélecteur 7, est quant à lui délivré vers l'entrée "reset" de la bascule électronique.

Un tel mécanisme de commutation permet ainsi de sélectionner au choix plusieurs modes de commutation de l'interrupteur K1, en fonction de la position choisie des sélecteurs 6, 7 et 10 :
- fermeture commandée - ouverture automatique :
   positions respectives (b) et (e) des sélecteurs 6, 7, ou position (e) du sélecteur 6 et position fermée du sélecteur 10,
- fermeture spontanée - ouverture automatique :
   positions respectives (c) et (e) des sélecteurs 6, 7,
- fermeture automatique - ouverture commandée :
   positions respectives (a), (d) des sélecteurs 6, 7,
- fermeture automatique - ouverture automatique :
   positions respectives (a), (e) des sélecteurs 6, 7,
- fermeture automatique - ouverture spontanée :
   position (a) du sélecteur 6 et ouverture spontanée réalisée par les jonctions séries de l'interrupteur K1.

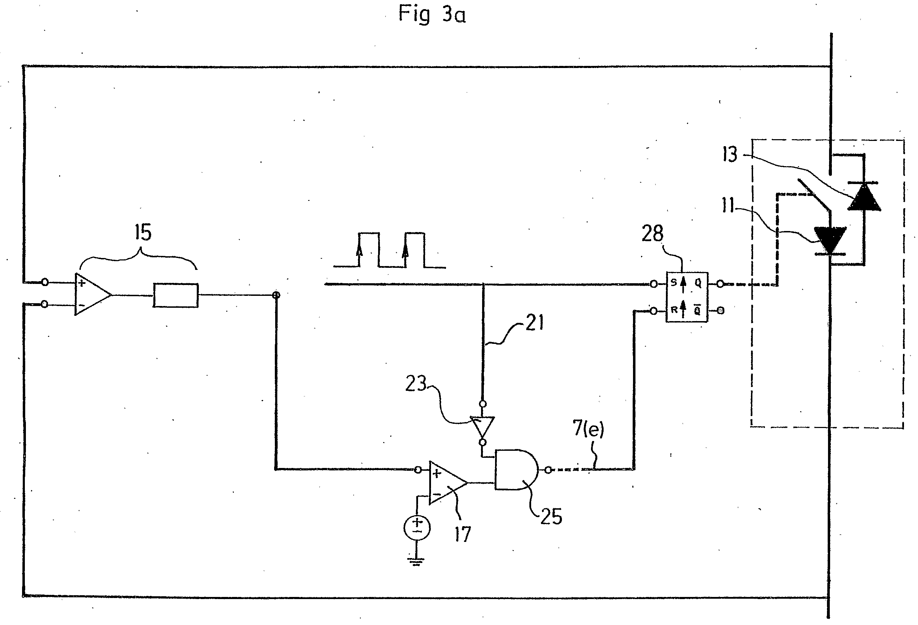

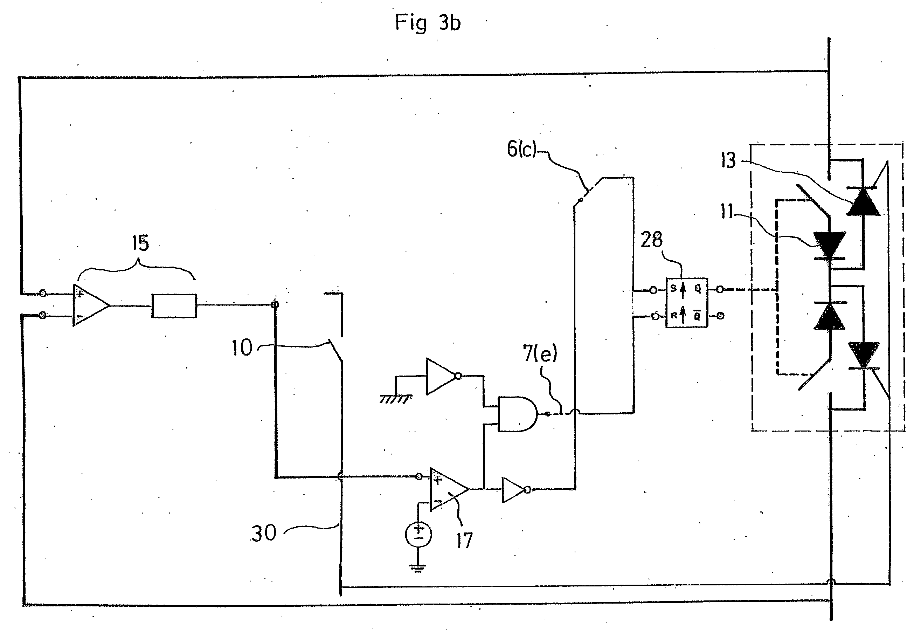

Plusieurs exemples d'application correspondant aux divers modes de commutation de l'interrupteur K1 précités, sont décrits ci-après :
En premier lieu, la figure 3 a représente le mécanisme de commutation de la figure 2 configuré de façon à déterminer le mode de commutation fermeture commandée - ouverture automatique (positions (b) et (e) des sélecteurs 6, 7).

Selon cette configuration, entre deux impulsions de la ligne de fermeture commandée 19, l'entrée de la porte logique 25 à laquelle est connectée la ligne de dérivation 21 est à un niveau logique haut du fait de la présence de l'inverseur 23. Par conséquent, lorsque la tension aux bornes de l'interrupteur K1 devient supérieure au seuil d'ouverture automatique, l'entrée "reset" de la bascule 28 est activée entraînant l'ouverture automatique de chaque transistor de interrupteur K1.

Par contre, lors d'une impulsion sur la ligne de commande 19, l'ouverture automatique est inactivée du fait que l'entrée de la porte logique 25 sur laquelle est connectée la ligne de dérivation 21 se trouve portée à un niveau logique bas, et l'entrée "set" de la bascule 28 est activée entraînant la fermeture de chaque transistor de l'interrupteur K1.

La figure 3b représente une variante permettant également d'obtenir le mode de commutation fermeture commandée (position fermée du sélecteur 10 et position c du sélecteur 6) - ouverture automatique (position e du sélecteur 7).

Selon cette configuration, les thyristors 13, 14 de l'interrupteur K1, sont commandés à la fermeture lors de la fermeture du sélecteur 10, en corrélation avec la position c du sélecteur 6 qui valide la fermeture spontanée par annulation de la tension aux bornes des transistors 11, 12.

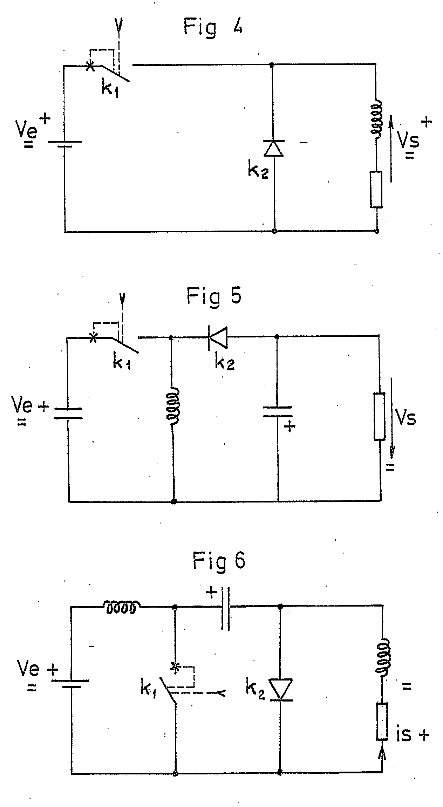

A titre d'exemples de réalisation selon ces modes de configuration, et en premier lieu, les figures 4, 5 et 6 représentent trois types de hacheurs comprenant une seule cellule de commutation comportant un interrupteur K1 composé d'un transistor 11, et un interrupteur K2 constitué d'une diode :
- un hacheur sans stockage ou survolteur dit "BUCK" (figure 4),
- un hacheur avec stockage inductif dit "BUCK-BOOST" (figure 5),
- et un hacheur avec stockage capacitif dit "CUK" (figure 6).

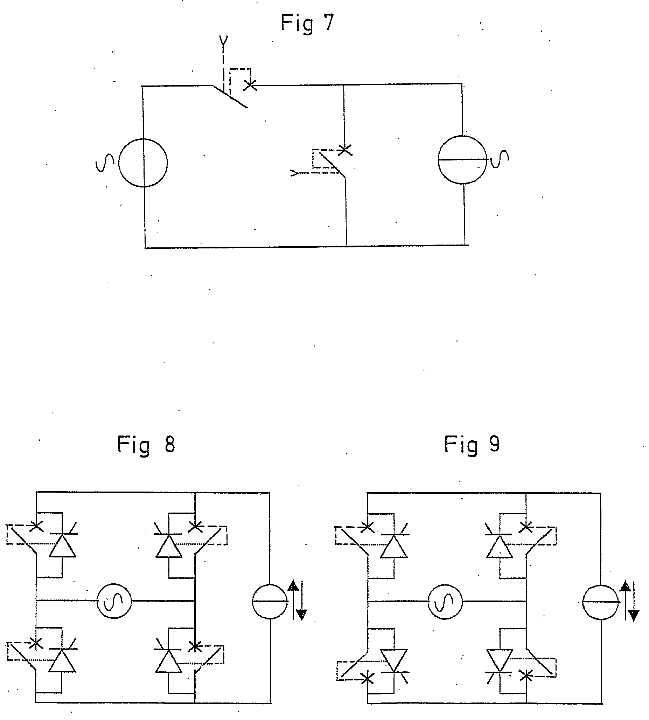

La figure 7 représente quant à elle un autre exemple consistant en une cellule gradateur à disjoncteurs commandés comportant deux interrupteurs K1 et K2 constitués chacun de deux transistors 11, 12 montés tête bêche en série, et de deux jonctions diodes 13, 14, chacune en parallèle avec un des transistors.

La figure 8 représente un autre exemple constitué de l'association de deux cellules élémentaires et consistant en un pont redresseur complet réversible en courant et en tension, à disjoncteurs "commandables". Chacune des cellules élémentaires comporte deux interrupteurs identiques composés chacun d'un transistor 11 monté en parallèle avec une jonction thyristor 13.

La figure 9 représente un pont redresseur mixte réversible en courant et en tension, à disjoncteurs commandables et "cosφ" unitaire. Ce redresseur est identique à celui décrit en référence à la figure 8, hormis l'inversion de 180° d'une des cellules unitaires qui lui confère une fonctionnalité différente.

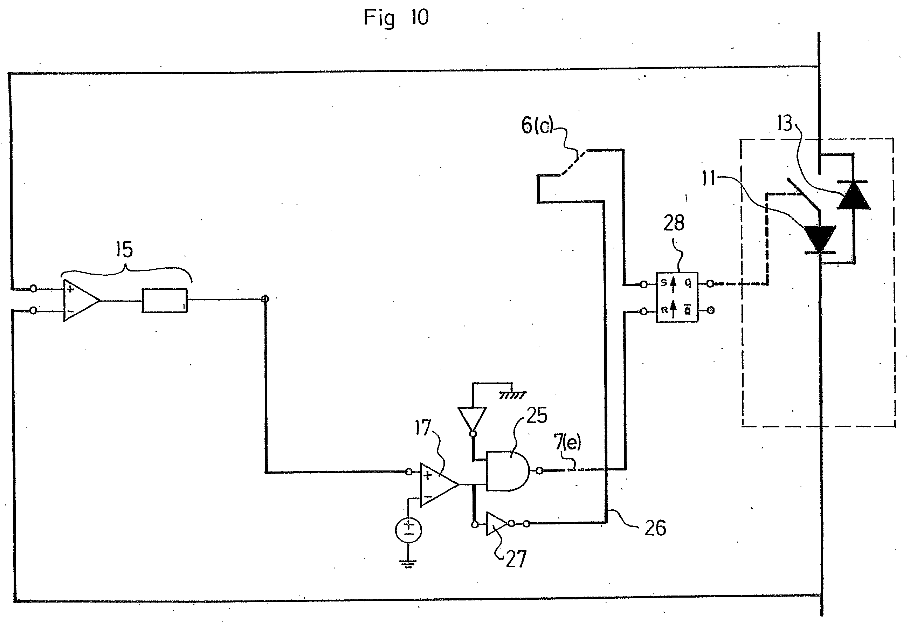

La figure 10 représente quant à elle le mécanisme de commutation de la figure 2 configuré de façon à déterminer le mode de commutation fermeture spontanée - ouverture automatique (positions (c) et (e) des sélecteurs 6, 7).

Selon cette configuration, l'ouverture automatique est déclenchée lorsque la tension aux bornes de l'interrupteur K1 devient supérieure au seuil d'ouverture automatique, du fait de l'activation du seuil "reset" de la bascule 28.

Par contre, lorsque la tension aux bornes de l'interrupteur K1 est inférieure au seuil d'ouverture automatique, l'entrée "set" de la bascule 28 est activée par la ligne de fermeture spontanée 26 du fait de la présence d'un inverseur 27, et une fermeture spontanée de l'interrupteur K1 est obtenue.

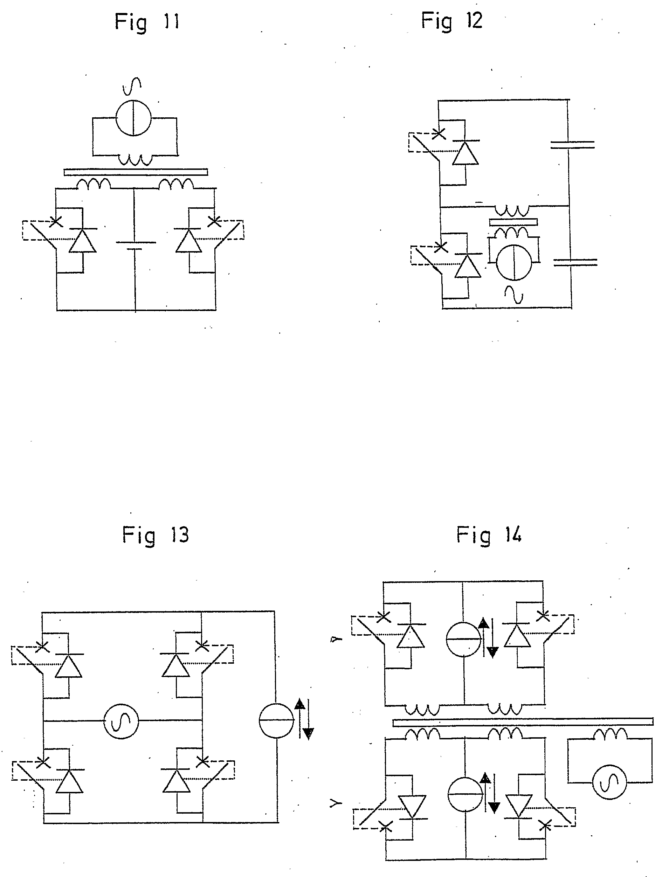

A titre d'exemples de réalisation selon ce mode de configuration, et en premier lieu, les figures 11, 12 représentent deux types de demi-ponts redresseurs dits "push pull" à disjoncteur' à "amorçage spontané", comprenant une cellule élémentaire comportant deux interrupteurs K1, K2 identiques composés d'un transistor 11 et d'une jonction diode en parallèle:
- un demi-pont/"push pull" parallèle (figure 11),
- un demi-pont/"push pull" série (figure 12).

La figure 13 représente quant à elle un pont redresseur réversible non contrôlé à disjoncteur auto-amorçable composé de l'association de deux cellules élémentaires comportant chacune deux interrupteurs K1, K2 identiques dotés d'un transistor 11 et d'une jonction diode 13 en parallèle.

La figure 14 représente une liaison à courant continu réversible non contrôlée et isolée à disjoncteur auto-amorçable composée de l'association de deux cellules élémentaires comportant chacune deux interrupteurs K1, K2 identiques similaires à ceux de la figure 13.

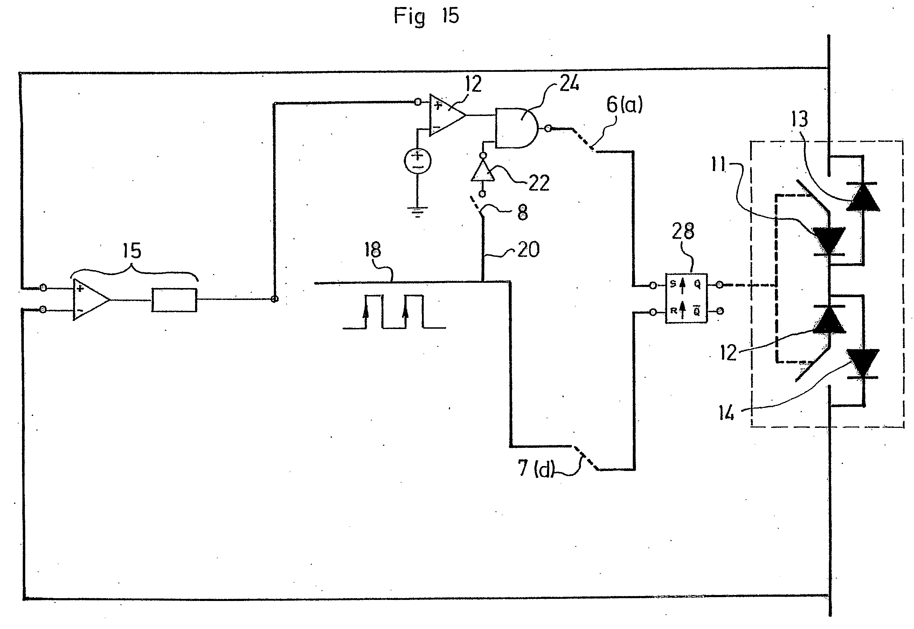

La figure 15 représente le mécanisme de commutation de la figure 2 configuré de façon à déterminer le mode de configuration fermeture automatique - ouverture commandée, (positions (a), (d) des sélecteurs 6, 7).

Selon cette configuration, entre deux impulsions de la ligne commandée 18, l'entrée de la porte logique "ET" 24 sur laquelle est connectée la ligne de dérivation 20 est à un seuil de niveau logique haut du fait de la présence 20 de l'inverseur 22. Par conséquent, lorsque la tension aux bornes de l'interrupteur K1 devient supérieure au seuil de fermeture automatique, l'entrée "set" de la bascule 28 est activée entraînant la fermeture automatique de chaque transistor de l'interrupteur K1.

Par contre, lors d'une impulsion sur la ligne de commande 18, la fermeture automatique est désactivée du fait que l'entrée de la porte logique 24 sur laquelle est connectée la ligne de dérivation 20 se trouve portée à un niveau logique bas, et l'entrée "reset" de la bascule est activée entraînant l'ouverture commandée de chaque transistor de l'interrupteur K1.

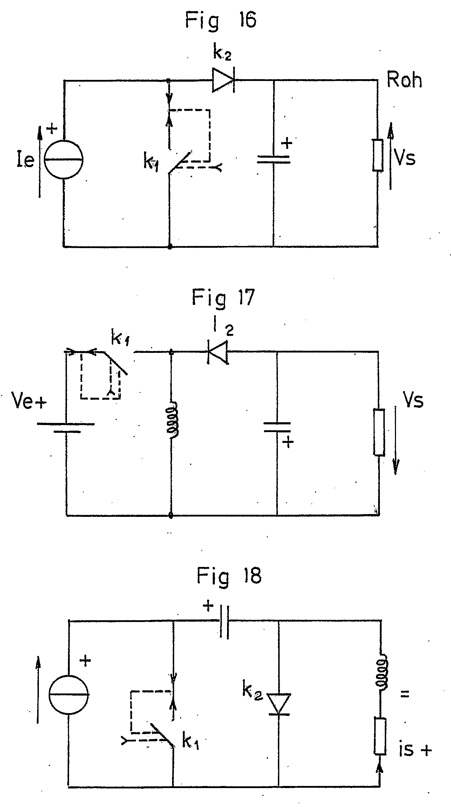

A titre d'exemples de réalisation selon ce mode de configuration, les figures 16, 17, 18 représentent trois types de hacheurs comprenant une seule cellule élémentaire comprenant un interrupteur K1 composé d'un transistor 11 et un interrupteur K2 constitué d'une jonction diode:
- un hacheur survolteur, dit "BOOST" (figure 16),
- un hacheur avec stockage inductif dit "BUCK-BOOST" (figure 17),
- et un hacheur avec stockage capacitif dit "CUK" (figure 18).

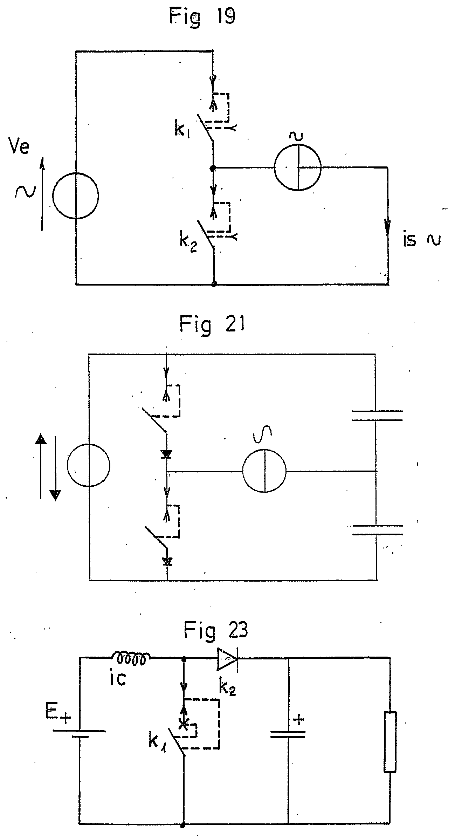

La figure 19 représente quant à elle un gradateur à disjoncteurs commandés comportant deux interrupteurs identiques K1, K2 constitués chacun de deux transistors 11, 12 montés tête-bêche en série et de deux jonctions diodes 13, 14, chacune en parallèle avec un transistor 11, 12.

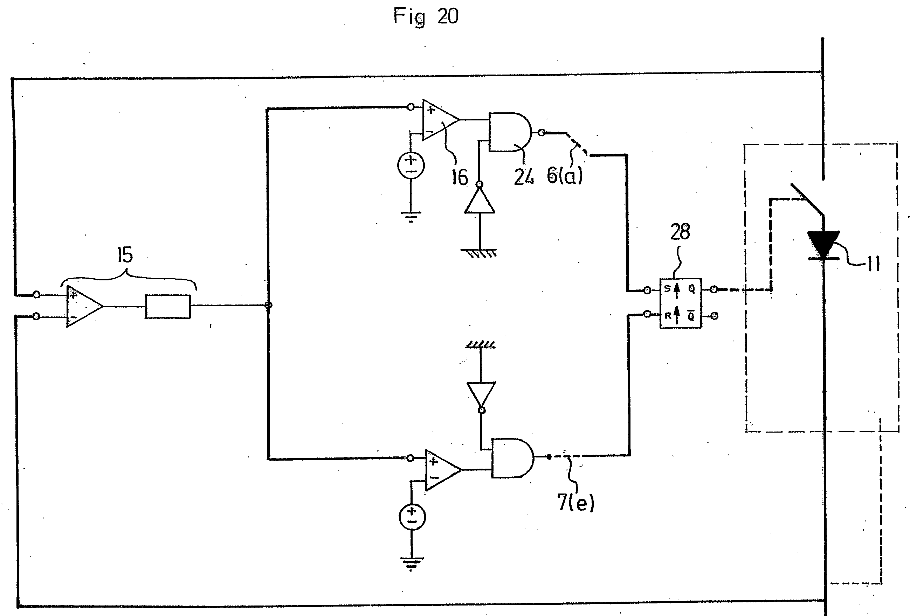

La figure 20 représente le mécanisme de commutation de la figure 2 configuré de façon à obtenir le mode de commutation fermeture automatique - ouverture spontanée (position (a) du sélecteur 6 et position (e) du sélecteur 7).

Selon cette configuration, la fermeture automatique intervient lorsque la tension aux bornes de l'interrupteur K1 devient supérieure au seuil de fermeture automatique, du fait de l'activation de l'entrée "set" de la bascule 28.

Par contre, lorsque la tension aux bornes de l'interrupteur K1 est inférieure au seuil de fermeture automatique, une ouverture spontanée est obtenue par les jonctions séries de l'interrupteur.

Par voie de conséquence, la remise à zéro de la bascule 28, se fait par la détection de la croissance de tension, et en particulier du franchissement du seuil bas en V.A. par l'intermédiaire du comparateur 17 et, de la porte 25 et du sélecteur 7 en position (e).

A titre d'exemples de réalisation selon ce mode de commutation, la figure 21 représente une cellule élémentaire constituant un disjoncteur dual comportant deux interrupteurs identiques K1, K2 disposés en série selon le même sens, et composés d'un transistor 12.

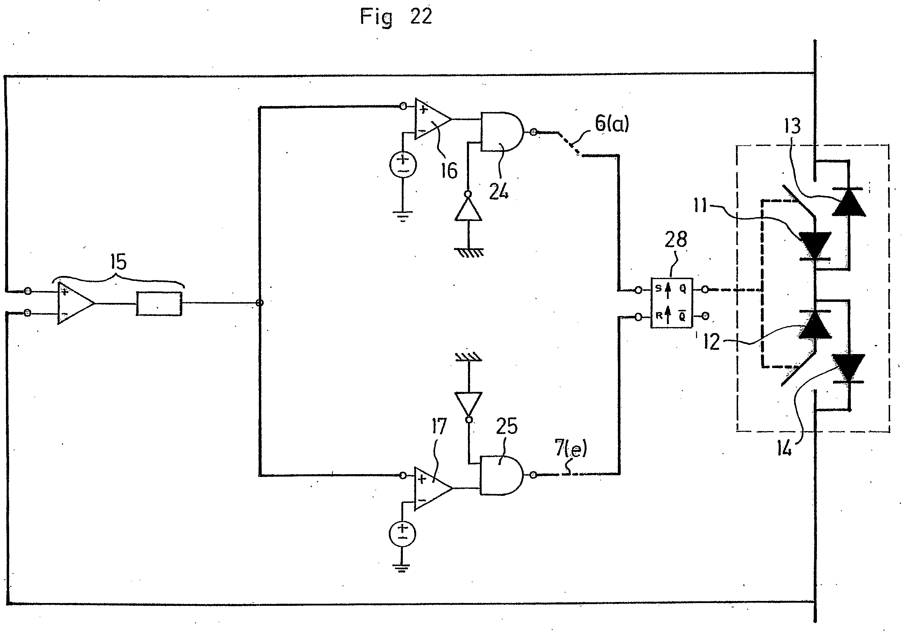

La figure 22 représente enfin le mécanisme de commutation de la figure 2 configuré de façon à obtenir un mode de commutation fermeture automatique - ouverture automatique (positions (a), (e) des sélecteurs 6, 7).

Selon cette configuration, les changements d'état de l'interrupteur K1 interviennent lorsque la tension aux bornes de cet interrupteur devient supérieure respectivement aux seuils de fermeture et d'ouverture.

Cette configuration constitue donc une compilation des configurations fermeture commandée et ouverture automatique et fermeture automatique et ouverture commandée.

A titre d'exemples, les figures 23, 24, 25 représentent trois hacheurs similaires à ceux représentés aux figures 4 à 6 (survolteur, stockage inductif, stockage capacitif) constitués chacun d'une cellule élémentaire comportant un interrupteur K1 constitué d'un transistor 12, et un interrupteur K2 constitué d'une jonction diode.

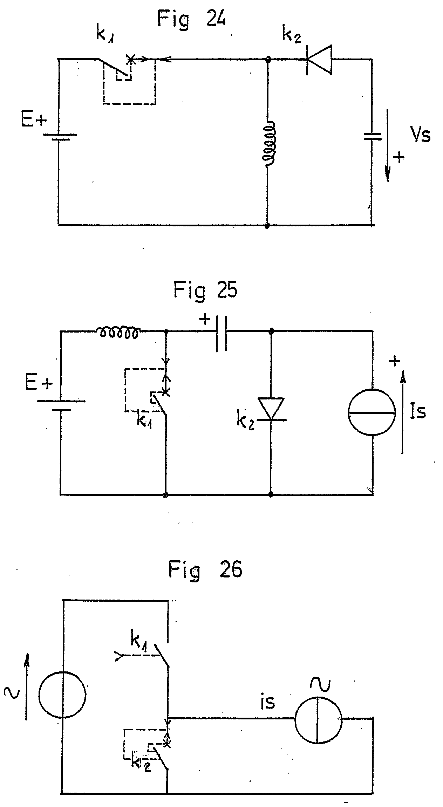

De même, la figure 26 représente un gradateur à un seul disjoncteur K1 à fermeture et ouverture automatiques, l'autre interrupteur K2 étant commandé à la fermeture et à l'ouverture.

## Revendications

1. Convertisseur statique d'énergie électrique destiné à moduler l'énergie électrique échangée entre au moins deux sources électriques, comprenant au moins une source électrique de tension (1), une source de courant (2), et au moins une cellule de commutation électrique, chaque cellule de commutation comportant au moins deux interrupteurs statiques de commutation connectés (kl, k2) en étoile sur ladite au moins une source de tension (1), avec le point commun de l'étoile connecté à la source de courant (2), et ladite source de courant étant refermée sur ladite au moins une source de tension (1), ledit convertisseur statique étant **caractérisé en ce qu'**au moins un des interrupteurs statiques (kl, k2) d'au moins une cellule de commutation, dit interrupteur à commutation automatique, est un interrupteur pourvu de deux électrodes de sortie (3,4) dont au moins un des changements d'état assurant une commutation à l'ouverture ou à la fermeture, appelé changement d'état automatique, s'opère exclusivement à un seuil de tension prédéfini différent de zéro lors de la croissance de la valeur absolue de la tension aux bornes des électrodes de sortie dudit interrupteur.

2. Convertisseur statique selon la revendication 1, **caractérisé en ce qu'**il comporte, pour chaque interrupteur à commutation automatique (kl, k2), en vue d'assurer chacun des changements d'état automatiques dudit interrupteur :
- un détecteur différentiel de tension (15) connecté en parallèle sur les électrodes (3,4) de sortie dudit interrupteur et adapté pour délivrer un signal représentatif de la valeur absolue de la tension aux bornes desdites électrodes,
- un comparateur de tension (16,17), associé au détecteur de tension (15) et adapté pour délivrer un signal de changement d'état, à l'ouverture ou à la fermeture, lorsque le seuil de tension prédéfini est atteint,
- et des moyens de commutation (5) connectés au comparateur de tension (15) et adaptés pour provoquer un changement d'état de l'interrupteur (kl, k2), assurant une commutation à l'ouverture ou la fermeture, lors de la réception du signal de changement d'état.

3. Convertisseur statique selon la revendication 2, **caractérisé en ce que** les moyens de commutation (5) comprennent une bascule électronique (28) comportant, pour chaque changement d'état automatique d'un interrupteur à commutation automatique (kl, k2), une entrée connectée au comparateur de tension (16,17) de façon à être activée lors de la réception d'un signal de changement d'état délivré par ce dernier, et à engendrer l'émission d'un signal de commutation vers l'interrupteur à commutation automatique (kl, k2).

4. Convertisseur statique selon l'une des revendications 2 ou 3, **caractérisé en ce que** chaque interrupteur à commutation automatique (kl, k2) comporte au moins une fonction transistor (11,12) doté d'une électrode de commande, actionnée par les moyens de commutation (5).

5. Convertisseur statique selon la revendication 4, **caractérisé en ce que** chaque interrupteur à commutation automatique (kl, k2) comporte une jonction ou un ensemble de jonctions (13,14) connectés en parallèle avec chaque transistor (11,12).

6. Convertisseur statique selon la revendication 5, **caractérisé en ce que** la jonction (13,14) présente une fonction de diode.

7. Convertisseur statique selon la revendication 5, **caractérisé en ce que** la jonction (13,14) présente une fonction de thyristor.

8. Convertisseur statique selon l'une des revendications 5 à 7, **caractérisé en ce qu'**il comprend au moins un interrupteur à commutation automatique (kl, k2) doté de deux fonctions transistors (11, 12) montés tête-bêche en série.

9. Convertisseur statique selon l'une des revendications précédentes, **caractérisé en ce qu'**il comprend au moins un interrupteur à commutation automatique dont un changement d'état, assurant la fermeture ou l'ouverture, est automatique (k1), et dont l'autre changement d'état, assurant l'ouverture ou la fermeture et appelé changement d'état commandé, est commandé par un signal constitué d'impulsions périodiques de commande.

10. Convertisseur statique selon les revendications 2 et 9 prises ensemble, **caractérisé en ce qu'**il comprend, en vue du changement d'état commandé de chaque interrupteur à commutation automatique (kl) :
- une ligne de commande (18, 19) sur laquelle est délivré le signal constitué d'impulsions périodiques de commande du changement d'état commandé de l'interrupteur,
- une ligne de dérivation (20,21) comportant un inverseur (8,9) et connectée à la ligne de commande (18, 19) et à une des entrées d'une porte logique "ET" (24,25) dont l'autre entrée reçoit le signal issu du comparateur de tension (16,17), et dont la sortie est reliée aux moyens de commutation (28).

11. Convertisseur statique selon l'une des revendications 1 à 8, **caractérisé en ce qu'**il comprend au moins un interrupteur à commande automatique (kl) dont les deux changements d'état assurant la fermeture et l'ouverture sont automatiques.

12. Convertisseur statique selon l'une des revendications 1 à 8, **caractérisé en ce qu'**il comprend au moins un interrupteur à commutation automatique (kl) dont un changement d'état, assurant la fermeture ou l'ouverture, est automatique, et dont l'autre changement d'état, assurant l'ouverture ou la fermeture et appelé changement d'état spontané, est spontané.

13. Convertisseur statique selon les revendications 2 et 12 prises ensemble, **caractérisé en ce qu'**il comprend, en vue du changement d'état spontané assurant une commutation à la fermeture, une ligne de changement d'état (26) comportant un inverseur (27) et reliant le comparateur de tension (17) et les moyens de commutation (28).

14. Convertisseur statique du type hacheur selon les revendications 4 et 9 prises ensemble, **caractérisé en ce qu'**il comprend une cellule de commutation électrique comportant un interrupteur à commande automatique (kl) composé d'un transistor (11) et dont le changement d'état automatique assure l'ouverture, et dont le changement d'état commandé assure la fermeture, et un second interrupteur (k2) présentant une fonction de diode.

15. Convertisseur statique du type gradateur selon les revendications 8 et 9 prises ensemble, **caractérisé en ce qu'**il comprend une cellule de commutation électrique comportant deux interrupteurs à commutation automatique (kl, k2) conformes à la revendication 8, assurant respectivement les changements d'état à l'ouverture et à la fermeture.

16. Convertisseur statique du type pont redresseur selon les revendications 5 et 9 prises ensemble, **caractérisé en ce qu'**il comprend deux cellules de commutation électrique disposées de part et d'autre d'une source de tension alternative (1) et comportant chacune deux interrupteurs à commande automatique (kl, k2) assurant, pour chacune desdites cellules, respectivement les changements d'état à l'ouverture et à la fermeture, chacun desdits interrupteurs étant composé d'un transistor (11) et d'une jonction (13) présentant une fonction de thyristor.

## Patentansprüche

1. Statischer Wandler von elektrischer Energie, ausgelegt, um die elektrische Energie zu modulieren, die zwischen mindestens zwei elektrischen Quellen ausgetauscht wird, umfassend mindestens eine elektrische Spannungsquelle (1), eine Stromquelle (2) und mindestens eine elektrische Kommutationszelle, wobei jede Kommutationszelle mindestens zwei statische Kommutationsschalter umfasst, die sternförmig (k1, k2) auf der mindestens einen Spannungsquelle (1) verbunden sind, wobei der gemeinsame Punkt des Sterns mit der Stromquelle (2) verbunden ist und die Stromquelle auf der mindestens einen Spannungsquelle geschlossen ist, wobei der statische Wandler **dadurch gekennzeichnet ist, dass** mindestens einer der statischen Schalter (k1, k2) von mindestens einer Kommutationszelle, genannt Schalter mit automatischer Kommutation, ein Schalter ist, der mit zwei Ausgangselektroden (3, 4) versehen ist, wobei mindestens eine der Zustandsänderungen, die eine Kommutation zur Öffnung oder zum Verschluss sicherstellt, genannt automatische Zustandsänderung, ausschließlich auf einer vorbestimmten Spannungsschwelle verschieden von null bei der Zunahme des absoluten Werts der Spannung an den Klemmen der Ausgangselektroden des Schalters durchgeführt wird.

2. Statischer Wandler nach Anspruch 1, **dadurch gekennzeichnet, dass** er, für jeden Schalter mit automatischer Kommutation (k1, k2) im Hinblick auf die Sicherstellung jeder der automatischen Zustandsänderungen des Schalters Folgendes umfasst:
- einen Differenzialspannungsdetektor (15), der parallel auf den Ausgangselektroden (3, 4) des Schalters verbunden und ausgelegt ist, um ein Signal zu liefern, das für den absoluten Wert der Spannung an den Klemmen der Elektroden repräsentativ ist,
- einen Spannungskomparator (16, 17), der mit dem Spannungsdetektor (15) assoziiert und ausgelegt ist, um ein Zustandsänderungssignal zur Öffnung oder zur Schließung zu liefern, wenn die Spannungsschwelle erreicht ist.
- und Kommutationsmittel (5), die mit dem Spannungskomparator (15) verbunden und ausgelegt sind, um eine Zustandsänderung des Schalters (k1, k2) hervorzurufen und eine Kommutation zur Öffnung oder Schließung beim Empfang des Zustandsänderungssignals sicherzustellen.

3. Statischer Wandler nach Anspruch 2, **dadurch gekennzeichnet, dass** die Kommutationsmittel (5) eine elektronische Wippe (28) umfassen, umfassend, für jede automatische Zustandsänderung eines Schalters mit automatischer Kommutation (k1, k2), einen Eingang, der mit dem Spannungskomparator (16, 17) derart verbunden ist, dass er beim Empfang eines Zustandsänderungssignals, das von diesem Letzteren geliefert wird, aktiviert wird, und die Ausgabe eines Kommutationssignals hin zum Schalter mit automatischer Kommutation (k1, k2) auslöst.

4. Statischer Wandler nach einem der Ansprüche 2 oder 3, **dadurch gekennzeichnet, dass** jeder Schalter mit automatischer Kommutation (k1, k2) mindestens eine Transistorfunktion (11, 12) umfasst, die mit einer Steuerelektrode versehen ist, die durch die Kommutationsmittel (5) aktiviert wird.

5. Statischer Wandler nach Anspruch 4, **dadurch gekennzeichnet, dass** jeder Schalter mit automatischer Kommutation (k1, k2) eine Verbindung oder eine Einheit von Verbindungen (13, 14) umfasst, die parallel mit jedem Transistor (11, 12) verbunden sind.

6. Statischer Wandler nach Anspruch 5, **dadurch gekennzeichnet, dass** die Verbindung (13, 14) eine Diodenfunktion aufweist.

7. Statischer Wandler nach Anspruch 5, **dadurch gekennzeichnet, dass** die Verbindung (13, 14) eine Thyristorfunktion aufweist.

8. Statischer Wandler nach einem der Ansprüche 5 bis 7, **dadurch gekennzeichnet, dass** er mindestens einen Schalter mit automatischer Kommutation (k1, k2) umfasst, der mit zwei Transistorfunktionen (11, 12) versehen ist, die hintereinander in Reihe montiert sind.

9. Statischer Wandler nach einem der vorhergehenden Ansprüche, **dadurch gekennzeichnet, dass** er mindestens einen Schalter mit automatischer Kommutation umfasst, wobei eine Zustandsänderung, die den Verschluss oder die Öffnung sicherstellt, automatisch ist (k1), und wobei die andere Zustandsänderung, die die Öffnung oder den Verschluss sicherstellt und als gesteuerte Zustandsänderung bezeichnet wird, durch ein Signal gesteuert wird, das aus periodischen Steuerimpulsen besteht.

10. Statischer Wandler nach Anspruch 2 und 9 zusammen, **dadurch gekennzeichnet, dass** er, im Hinblick auf die gesteuerte Zustandsänderung jedes Schalters mit automatische Kommutation (k1) Folgendes umfasst:
- eine Steuerleitung (18, 19), auf der das Signal geliefert wird, das aus periodischen Steuerimpulsen der gesteuerten Zustandsänderung des Schalters besteht,
- eine Bypass-Leitung (20, 21), umfassend einen Wendeschalter (8, 9) und verbunden mit der Steuerleitung (18, 19) und mit einem der Eingänge eines logischen Gates "ET" (24, 25), wobei der andere Eingang das Signal empfängt, das aus dem Spannungskomparator (16, 17) stammt, und wobei der Ausgang mit den Kommutationsmitteln (28) verbunden ist.

11. Statischer Wandler nach einem der Ansprüche 1 bis 8, **dadurch gekennzeichnet, dass** er mindestens einen Schalter mit automatischer Steuerung (k1) umfasst, wobei die zwei Zustandsänderungen, die den Verschluss und die Öffnung sicherstellen, automatisch sind.

12. Statischer Wandler nach einem der Ansprüche 1 bis 8, **dadurch gekennzeichnet, dass** er mindestens einen Schalter mit automatischer Kommutation (k1) umfasst, wobei eine Zustandsänderung, die den Verschluss oder die Öffnung sicherstellt, automatisch ist, und wobei die andere Zustandsänderung, die die Öffnung oder den Verschluss sicherstellt und als spontane Zustandsänderung bezeichnet wird, spontan ist.

13. Statischer Wandler nach Anspruch 2 und 12 zusammen, **dadurch gekennzeichnet, dass** er, im Hinblick auf sie spontane Zustandsänderung, die eine Kommutation zum Verschluss sicherstellt, eine Zustandsänderungs-Leitung (26) umfasst, umfassend einen Wendeschalter (27) und verbindend den Spannungskomparator (17) und die Kommutationsmittel (28).

14. Statischer Wandler vom Typ Zerhacker nach Anspruch 4 und 9 zusammen, **dadurch gekennzeichnet, dass** er eine elektrische Kommutationszelle umfasst, umfassend einen Schalter mit automatischer Steuerung (k1), zusammengesetzt aus einem Transistor (11), und wobei dessen automatische Zustandsänderung die Öffnung sicherstellt, und wobei dessen gesteuerte Zustandsänderung den Verschluss sicherstellt und ein zweiter Schalter (k2) eine Diodenfunktion aufweist.

15. Statischer Wandler vom Typ Dimmer nach Anspruch 8 und 9 zusammen, **dadurch gekennzeichnet, dass** er eine elektrische Kommutationszelle umfasst, umfassend zwei Schalter mit automatischer Kommutation (k1, k2) nach Anspruch 8, die jeweils die Zustandsänderungen zur Öffnung und zum Verschluss sicherstellen.

16. Statischer Wandler vom Typ Gleichrichterbrücke nach Anspruch 5 und 9 zusammen, **dadurch gekennzeichnet, dass** er zwei elektrische Kommutationszellen umfasst, die auf beiden Seiten einer Wechselspannungsquelle (1) angeordnet sind und jeweils zwei Schalter mit automatischer Steuerung (k1, k2) umfassen, die, für jede der Zellen, jeweils die Zustandsänderungen zur Öffnung und zum Verschluss sicherstellen, wobei jeder der Schalter aus einem Transistor (11) und einer Verbindung (13) zusammengesetzt ist, die eine Thyristorfunktion aufweist.

## Claims

1. Static converter of electrical energy intended to modulate the electrical energy exchanged between at least two electrical sources, comprising at least one electrical voltage source (1), one current source (2), and at least one electrical switching cell, each switching cell having at least two static switches (k1, k2) star-connected to said ta least one voltage source (1), with the common point of the star connected to the current source (2), and said current source being connected back to said at least one voltage source (1), said static converter being **characterized in that** at least one of the static switches (k1, k2) of at least one switching cell, called switch with automatic switching, is a switch provided with two output electrodes (3, 4) of which at least one of the changes of state providing opening or closing switching, called automatic change of state, is operated exclusively at a predefined voltage threshold other than zero when the absolute value of the voltage at the terminals of the two output electrodes increases.

2. Static converter according to claim 1, **characterized in that** it has, for each switch (k1, k2) with automatic switching, with a view to providing each of the automatic changes of state of said switch:
- a differential voltage detector (15) connected in parallel to the output electrodes (3, 4) of said switch and adapted to deliver a signal representing the absolute value of the voltage at the terminals of said electrodes,
- a voltage comparator (16, 17) connected to the voltage detector (15) and adapted to deliver a change-of-state signal, at the opening or at the closing, when the predefined voltage threshold is reached,
- and switching means (5) connected to the voltage comparator (15) and adapted to bring about a change of state of the switch (k1, k2), providing switching at the opening or at the closing when receiving the change-of-state signal.

3. Static converter according to claim 2, **characterized in that** the switching means (5) comprise an electronic flip-flop (28) comprising, for each automatic change of state of a switch with automatic switching (k1, k2), an input connected to the voltage comparator (16, 17) so as to be activated during the reception of a change-of-state signal delivered by the latter, and to initiate the transmission of a switching signal to the switch with automatic switching (k1, k2).

4. Static converter according to claim 2 or 3, **characterized in that** each switch with automatic switching (k1, k2) comprises at least one transistor function (11, 12) equipped with a control electrode activated by the switching means (5).

5. Static converter according to claim 4, **characterized in that** each switch with automatic switching (k1, k2) comprises a junction or a set of junctions (13, 14) connected in parallel to each transistor (11, 12).

6. Static converter according to claim 5, **characterized in that** the junction (13, 14) has a diode function.

7. Static converter according to claim 5, **characterized in that** the junction (13, 14) has a thyristor function.

8. Static converter according to any one of claims 5 to 7, **characterized in that** it comprises at least one switch with automatic switching (k1, k2) equipped with two transistor functions (11, 12) mounted head to tail in series.

9. Static converter according to claim 1, **characterized in that** it comprises at least one switch with automatic switching whose change of state, providing closing or opening, is automatic (k1) and whose other change of state, providing opening or closing and called controlled change-of-state, is controlled by a signal constituted by cyclic control pulses.

10. Static converter according to claims 2 to 9 taken together, **characterized in that** it comprises, with a view to the controlled change of state of each switch with automatic switching (k1):
- a control line (18, 19) on which is supplied a signal composed of cyclic control pulses for the controlled change of state of the switch,
- a shunt line (20, 21) having an inverter (8, 9) and connected to the control line (18, 19) and to one of the inputs of an "AND" logic gate (24, 25) whose other input receives the signal coming from the voltage comparator (16, 17), and whose output is connected to the switching means (28).

11. Static converter according to any of claims 1 to 8, **characterized in that** it comprises at least one switch with automatic control (k1) whose two changes of state providing closing and opening are automatic.

12. Static converter according to any one of claims 1 to 8, **characterized in that** it comprises at least one switch with automatic control (k1) whose one change of state providing closing or opening is automatic, and whose other change of state providing opening or closing and called spontaneous change-of-state, is spontaneous.

13. Static converter according to claims 2 and 12 taken together, **characterized in that** it comprises, with a view to the spontaneous change of state providing closing switching, a change-of-state line (26) comprising an inverter (27) and connecting the voltage comparator (17) and the switching means (28).

14. Chopper type static converter according to claims 4 to 9 taken together, **characterized in that** it comprises an electrical switching cell comprising a switch with automatic control (k1) composed of a transistor (11) and whose automatic change of state provides opening, and whose controlled change of state provides closing, and a second switch (k2) having a diode function.

15. Dimmer type static converter according to claims 8 and 9 taken together, **characterized in that** it comprises an electrical switching cell comprising two switches with automatic switching (k1, k2) according to claim 8, providing the opening and closing changes of state, respectively.

16. Rectifier bridge type static converter according to claims 5 to 9, **characterized in that** it comprises two electrical switching cells arranged either side of an alternating voltage source (1) and each comprising two switches with automatic control (k1, k2) providing, for each of said cells, the opening and closing changes of state, respectively, each of said switches being composed of a transistor (11) and a junction (13) having a thyristor function.
